# EUROPEAN PATENT SPECIFICATION

(11) **EP 3 359 391 B1**
(45) Date of publication and mention of the grant of the patent: **16.12.2020**
(21) Application number: 16781153.8
(22) Date of filing: 04.10.2016
(51) Int. Cl.: B42D 25/455, B42D 25/351, B42D 25/46

(54) **A SECURITY SHEET FOR AN IDENTITY DOCUMENT**
SICHERHEITSBLATT FÜR EIN IDENTIFIKATIONSDOKUMENT
FEUILLE DE SÉCURITÉ POUR UNE PIÈCE D'IDENTITÉ

(30) Priority: 05.10.2015 GB 201517562
(43) Date of publication of application: 15.08.2018
(73) Proprietor: De La Rue International Limited, Basingstoke, Hampshire RG22 4BS (GB)
(72) Inventor: SUGDON, Matthew Charles, Basingstoke Hampshire RG22 4BS (GB)
(74) Representative: Boult Wade Tennant LLP
(86) International application number: PCT/GB2016/053078
(87) International publication number: WO 2017/060683

(56) References cited:
- EP-A2- 2 886 364
- WO-A1-2015/030575

## Description

The present invention is directed towards a security sheet for an identity document comprising a plurality of windows in a plastic substrate. The present invention is further directed to an identification document comprising the security sheet, a plurality of such identity documents and a method of manufacturing the security sheet.

Security documents and booklets, such as passports, passbooks, identity documents, certificates, licences, cheque books and the like, commonly comprise one or more security pages on which information is provided. For example, a passport booklet generally comprises a cover and a plurality of internal visa pages therebetween. Typically the visa pages are made from paper having a grammage of around 85 gsm and are sewn together along a stitch line. The cover is adhered to the outside of the visa pages and thereby protects the stitch line.

At least one security sheet or data page is provided in the booklet and is usually the second or the penultimate page, typically located between one of the visa pages and the cover. The security sheet usually contains personal data and is generally overlaid by a layer of polymer laminate, usually applied as a film or lacquer. This layer helps protect the data and prevent counterfeiting and fraudulent alteration. The security sheet may be formed from a fibrous substrate and may comprise security features, such as watermarks, laser perforations, security fibres, security threads, security print and the like.

Alternatively, the security sheet may be formed from a sheet comprising a plastic which is typically polycarbonate. Plastic sheets are more durable than fibrous substrate security sheets and are resistant to delamination by a counterfeiter. During manufacture a number of thin plastic layers are laid over one another and fused together to form a thicker plastic sheet. The most common method of fusing the thinner plastic layers together involves placing them in between a "sandwich" of steel or brass laminating plates. A number of such sandwiches are stacked on top of each other and heat is applied to the top and bottom of the stack. The heat is transferred through the thinner plastic layers and laminating plates such that the thinner plastic layers fuse together, thereby forming a plastic sheet within each sandwich. A low temperature is then applied to the top and bottom of the stack to cool and harden the plastic sheets. However, such a method is relatively time inefficient as each heating and cooling cycle lasts for around thirty minutes. Furthermore, it can lead to uneven fusing and quality of the plastic sheets due to varying temperature and pressure distribution throughout the stack. This is caused by the laminating plates closer to the top and bottom of the stack usually being hotter (during heating) or colder (during cooling) than those in the middle of the stack.

An alternative, semi-continuous, method of manufacturing plastic security sheets for security documents is disclosed in US-B-6669813. The thin plastic layers are brought together before being incrementally conveyed between two opposing continuous belts through a series of heating and cooling devices. A section of the thin plastic layers is initially kept stationary by the continuous belts and the layers are heated and pressed together under pressure by the heating devices such that they fuse into a plastic sheet. After a certain amount of time, typically less than a minute, the continuous belts move the section to between the cooling devices where it is cooled and pressure is again applied, typically for less than a minute. The resulting plastic sheets are substantially uniform in quality.

A plastic security sheet may comprise various security features, such as UV responsive arrangements, optically variable features, windowed or transparent features, laser-perforations, laser markings and tactile features. Personal data, including the passport holder's portrait, may be applied to the surface of the security sheet by printing or within the thickness of the security sheet using laser marking. Counterfeiters typically attempt to alter the security sheets by grinding away the plastic substrate to remove and alter the personal data and replace it with different data.

Document EP 2 886 364 A2 discloses a security sheet according to the preamble of claim 1.

An object of the present invention is to provide a security sheet for an identity document including improved security features and in particular those for preventing the alteration of the personal data.

The present invention therefore provides a security sheet in accordance with claim 1.

Preferably each of the plurality of windows is formed from an insert located in an aperture in at least one of the plurality of plastic layers.

Preferably at least one security element is less than approximately 5 mm from at least one window. Further preferably the at least one security element is in the form of personal data selected from at least one of an image, text and a machine readable zone containing machine readable data.

Preferably the at least one security element comprises marking within the plastic substrate and/or printed ink on the plastic substrate. The at least one security element preferably at least partially overlies at least one window and the at least one security element is at least partially transparent such that the at least one window is visible through the at least one security element. The at least one security element preferably at least partially overlies at least one window, wherein the at least one security element is opaque such that the at least one window is only visible from one outer surface of the plastic substrate.

The security sheet preferably further comprises an opaque region extending around and between the windows. The perimeter of each window preferably has a shape selected from one or more patterns, indicia, symbols or logos. Preferably the perimeters adjacent windows have outer shapes which together form a sequence of linked patterns, indicia, symbols and/or logos and/or a code. Each window preferably has a maximum width of at least approximately 1mm, at least approximately 3 mm or at least approximately 4 mm. The security sheet further preferably comprises an additional element overlying and registered to at least one window.

In a preferred embodiment the security sheet is for a machine readable travel document conforming to the standards of the International Civil Aviation Organization and the plurality of windows are located in Zone V as defined by the standards and the at least one security element forms a personal identity feature. Further preferably the security sheet is for a machine readable passport (MRP) of TD3 size which conforms to the standards set out in Part 4 of the Seventh Edition of Document 9303 (2015). Zone V may have the dimensions of approximately 64.8 mm by approximately 37 mm and is located at a left hand side of the security sheet. The area of the security sheet occupied by the plurality of windows is preferably less than approximately 20% of the area of Zone V.

The present invention further provides an identity document comprising the aforementioned security sheet comprising a passport, identity card or driving licence. The identity document preferably comprises a machine readable passport formed according to Size 3 Machine Readable Travel Documents (TD3) of the standards of the International Civil Aviation Organization.

The present invention further provides an identity document comprising an adjacent page to the aforementioned security sheet, the adjacent page comprising a security feature which is in register with at least one security element overlying at least one window when the security sheet overlies the adjacent page.

The present invention further provides a plurality of identity documents, each comprising the aforementioned security sheet, wherein the security sheets comprise identical windows and different security elements forming different personal data.

The present invention further provides a method in accordance with claim 11.

The method preferably further comprises forming at least one aperture in at least one plastic layer and inserting an insert into the at least one aperture for forming the windows; feeding a plurality of plastic layers, including the insert and the at least one plastic layer, into a laminator; and applying heat and pressure to the plurality of plastic layers in the laminator to form the plastic substrate. The insert may comprise a flowable material. Alternatively, the insert may be formed by punching an insert substrate from a strip.

Preferably the at least one security element is applied by marking a markable additive in at least one of the plastic layers. Further preferably the at least one security element is applied to the plastic substrate through at least one window.

Preferably the fusing step is performed by a laminator comprising at least one continuous belt for receiving and moving the plurality of plastic layers, and wherein the heating and pressurising step comprises applying at least one heating device of the laminator under pressure to the plurality of plastic layers through the at least one continuous belt. The fusing step preferably comprises applying heat and pressure to at least the plastic layers such that at least the plastic layers are in an at least softened state. The plastic layers and/or insert substrate are preferably heated and pressurised to at least a Vicat softening point, determined as per the methods of ASTM D 1525 and ISO 306, of the plastic forming the plastic layers and/or insert substrate.

The present disclosure further provides a security sheet for an identity document comprising a plastic substrate formed from a plurality of plastic layers, the plastic substrate comprising a plurality of windows and at least one security element in the form of personal data, the at least one security element being located in and/or on the plastic substrate and adjacent to or overlapping at least one of the windows.

By way of example only, embodiments of a security sheet, an identity document, a plurality of identity documents and a method of manufacture in accordance with the present invention are now described with reference to, and as shown in, the accompanying drawings, in which:
Figure 1 is a plan view of a passport opened between a security sheet and a visa page;
Figure 2 is a cross-sectional side elevation of the security sheet of Figure 1 through section A-A;
Figure 3 a cross-sectional side elevation of a laminar structure prior to being laminated into a plastic substrate for forming the security sheet of Figure 1;
Figure 4 is a cross-sectional side elevation of an apparatus for use in a method of manufacturing the security sheet of the passport of Figure 1;
Figure 5 is a plan view of a further embodiment of a passport opened between a security sheet and a visa page;
Figure 6 is a cross-sectional side elevation of the security sheet of Figure 5 through section B-B; and
Figure 7 is a plan view of an insert suitable for incorporation into the security sheet of Figure 1.

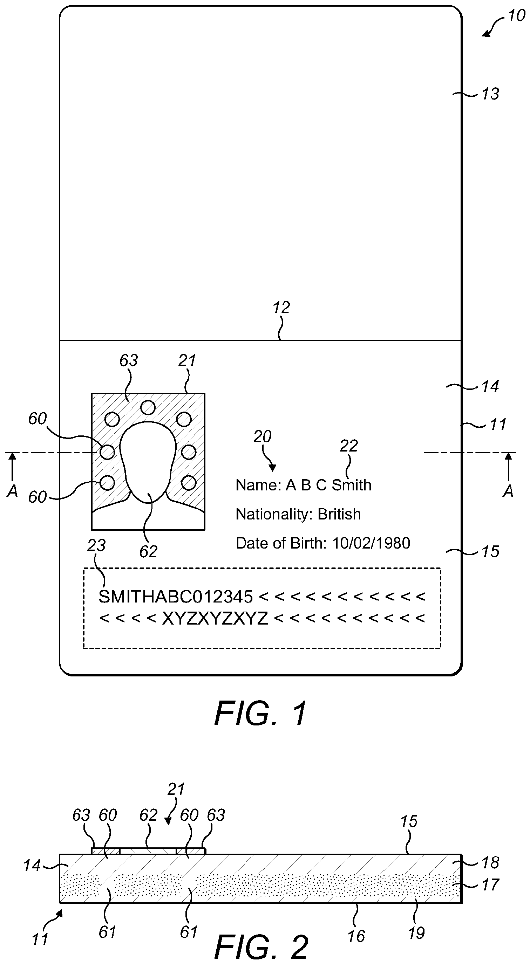

Figure 1 illustrates an identity document 10, in this case a passport, comprising a security sheet 11, in this case a data page, sewn along a stitch line 12 to a plurality of visa pages 13 and a cover (not shown). The visa pages 13 are typically made from a fibrous substrate, such as paper, and may include a number of security features, such as security threads, security fibres and watermarks.

As shown in further detail in Figure 2, the security sheet 11 comprises a plastic substrate 14 having a first outer surface 15 and a second outer surface 16. Each of the first and second outer surfaces 15, 16 is preferably substantially flat and planar. The plastic substrate 14 is formed from a plurality of layers which are fused together into a substantially non-laminar or unitary structure. The plastic from which the plastic substrate 14 is formed may be a thermoplastic polymer, such as polycarbonate, polyester, polyethylene, polypropylene or polyvinyl chloride. Polycarbonate is particularly suitable due to its high durability, its ease of manufacture and the ease with which security features can be incorporated within it. The security sheet 11 may be substantially rigid, or at least semirigid, by virtue of the thickness of the plastic substrate 14. The thickness of the plastic substrate 14, which is the distance between the first and second outer surfaces 15, 16, is preferably at least approximately 150 µm and more preferably at least approximately 300 µm. In particular, the plastic substrate 14 may be between approximately 300 µm and 1000 µm thick and, for example, may be approximately 800 µm thick.

The plastic substrate 14 preferably comprises a substantially opaque region 17 within its thickness and separated from the first and second outer surfaces 15, 16 by first and second substantially transparent regions 18, 19. The plastic substrate 14 further comprises a plurality of windows 60, each of which is formed from third substantially transparent regions 61 through the opaque region 17 and the portions of the first and second transparent regions 18, 19 overlying the third transparent regions 61. Each window 60 is substantially transparent such that visible light can pass through it and objects can be seen through it. Each window 60 may be clear, coloured or the like by suitable selection of the properties of the first, second and third transparent regions 18, 19, 61.

In the illustrated embodiment the shape of the perimeter of each window 60 is a circle. However, each window 60 may have any other suitable perimeter shape including patterns, indicia, symbols, logos or the like. Furthermore, although in Figure 1 each window 60 has the same perimeter shape, each window 60 may have a different perimeter shape in order to increase the difficulty required to counterfeit the identity document 10. In a particular arrangement the windows 60 form a sequence of linked patterns, indicia, symbols, logos or the like. For example, the windows 60 may be in the form of the numerals "1", "2" and "3". The windows 60 may alternatively be in the form of a code in that they convey hidden information.

In order to increase the difficulty of counterfeiting or modifying the security sheet 11, a relatively high number of windows 60 are included. The security sheet 11 therefore preferably comprises at least three windows 60 and more preferably comprises at least five, at least ten or at least fifteen windows 60. The security of the identity document 10 improves with the number of windows 60 included, as a counterfeiter would have to accurately reproduce each one in a counterfeit document. Each window 60 may have a maximum width, which is its largest dimension parallel to the planes of the first and second outer surfaces 15, 16, in the range of from approximately 0.5 mm to approximately 10 mm inclusive and more preferably in the range of from approximately 3 mm to approximately 6 mm inclusive. The maximum width may be at least 1 mm, at least 3 mm, and more preferably at least 4 mm, in order ensure that the window 60 is sufficiently visible.

The security sheet 11 further comprises at least one security element 20 located in and/or on the plastic substrate 14 in the form or shape of personal data identifying the holder of the identity document 10. As illustrated in Figure 2, the at least one security element 20 may comprise printed ink on the first and/or second outer surface 15, 16. Such personal data is known as "variable data" or "biographical data" and, typically, no two identity documents 10 issued by an issuing authority contain the same personal data. Counterfeiters commonly attempt to adapt or replace this personal data and the windows 60 are provided to increase the difficulty of the adaption and replacement. The Seventh Edition (2015) of Document 9303 ("Machine Readable Travel Documents") issued by the International Civil Aviation Organization (ICAO) describes such biographical data. The personal data of the illustrated embodiment includes an image 21, text 22 providing the holder's name, nationality and date of birth and a machine readable zone 23 containing machine readable data.

The at least one security element 20 is visible when the first outer surface 15 is viewed in reflected light incident upon the first outer surface 15. The at least one security element 20 is adjacent to or overlaps at least one of the windows 60. All of the windows 60 may be adjacent to or overlap a single security element 20, such as the image 21. In the case of the at least one security element 20 overlapping at least one of the windows 60, the at least one security element 20 is preferably at least partially transparent such that the windows 60 are visible behind the printed ink. However, in other embodiments the at least one security element 20 is substantially opaque and at least one window 60 is only detectable by virtue of the at least one security element 20 being visible through the at least one window 60 from the second outer surface 16.

Preferably at least one security element 20 is located less than approximately 5 mm, and more preferably less than approximately 3 mm, from at least one window 60 when measured at or viewed in the first and/or second outer surface 15, 16. Each window 60 may be located less than approximately 5 mm, and more preferably less than approximately 3 mm, from at least one security element 20 when measured at or viewed in the first and/or second outer surface 15, 16. Such dimensions ensure that a counterfeiter would have to grind away at least some of the windows 60 when attempting to adapt the at least one security element 20.

Figure 1 illustrates a particularly preferable embodiment in which the windows 60 are located within the image 21. The image 21 is a photographic portrait of the holder of the identity document 10 and comprises at least a portrait image 62 showing at least the holder's face. The image 21 further comprises a background image 63 and the windows 60 are located around the portrait image 62 in the background image 63. The contents of the image 21 are visible in reflected light incident upon the first outer surface 15 and are indistinguishable when viewed through the windows 60 from the second outer surface 16. The image 21 may just comprise the portrait image 62 and the windows 60 may be disposed around the boundary of the portrait image 62. These arrangements are particularly effective as the image 21 occupies a relatively large area so a counterfeiter would find it relatively difficult to avoid damaging the windows 60.

In a particular embodiment the windows 60 are located in Zone V of the identity document 10 as defined in ICAO standards for machine readable travel documents (MRTDs). This ensures that the windows 60 are sufficiently close to a security element 20, in the form of a holder's portrait, such that a counterfeiter would have to adapt the windows 60 as well as the security element 20. Document 9303 issued by ICAO sets standards for the layout of the security sheets of MRTDs and, in particular, defines areas of the security sheet 11 for certain data elements and features as one of Zones I to VII. Zone V is for a mandatory identification feature in the form of the document holder's portrait or image 21 and Document 9303 specifies its location, particularly in Size 1 Machine Readable Official Travel Documents (TD1), Size 2 Machine Readable Official Travel Documents (TD2) and Size 3 Machine Readable Travel Documents (TD3). Zone V is defined in different identity documents throughout Document 9303 and it is noted that Zone V is also defined in previous Editions of Document 9303 (particularly the Sixth Edition issued in 2006). The plurality of windows 60 may be located in Zone V of any one of TD1, TD2 and TD3 sized travel documents. For the avoidance of doubt, since the position of Zone V may be varied slightly in accordance with tolerances and allowances set out in Document 9303, in the present disclosure "Zone V" refers to any possible dimension or position of Zone V as defined in Document 9303.

In a particular embodiment, the identity document 10 is a machine readable passport (MRP) of TD3 size and conforms to the standards set out in Part 4 of the Seventh Edition of Document 9303 (2015). In brief, the security sheet 11 therefore has the nominal dimensions as specified in ISO/IEC 7810, which are 88.0 mm ± 0.75 mm by 125.0 mm ± 0.75 mm. The security sheets comprise margins of 2.0 mm (0.08 in) along the left and right hand edges and top edge which are left clear of personal data. Figure 8 of Part 4 of Document 9303 indicates that, in a nominal position, the lower edge of Zone V is 64.8 ± 0.75 mm from the top edge of the MRP security sheet and the right edge of Zone V is 37 mm from the left edge of the MRP security sheet. The left edge of Zone V is coincident with the left edge of the MRP security sheet, although the portrait is at least 2 mm from the left edge for the margin. The top edge of Zone V, bordered by the bottom edge of Zone I, is up to 17.9 mm from the top edge of the MRP security sheet. Thus Zone V may have a dimension of approximately 64.8 mm by approximately 37 mm. The portrait or image 21 within Zone V is no larger than 45.0 mm by 35.0 mm and no smaller than 32.0 mm by 26.0 mm.

The area of the security sheet 11 occupied by the plurality of windows is less than approximately 20% of the area of Zone V (i.e. less than approximately 480 mm²), more preferably less than 15% of the area of Zone V (i.e. less than approximately 360 mm²) and yet more preferably less than approximately 10% of the area of Zone V (i.e. less than approximately 240 mm²).

The plastic substrate 14 may also comprise any other suitable security feature, such as UV responsive features, optically variable features, windowed or transparent features, antenna, electronic chips and laser-perforations.

The security sheet 11 is generally manufactured by forming a plurality of inserts 65, forming a laminar structure 32 including the plurality of inserts 65 therein and laminating the laminar structure 32 together to form the plastic substrate 14. A strip of substantially transparent plastic may initially be cut by a punching tool to form a plurality of inserts 65 before or during the formation of the laminar structure 32. The shape of the perimeter of each insert 65 forms the shape of the perimeter of each window 60.

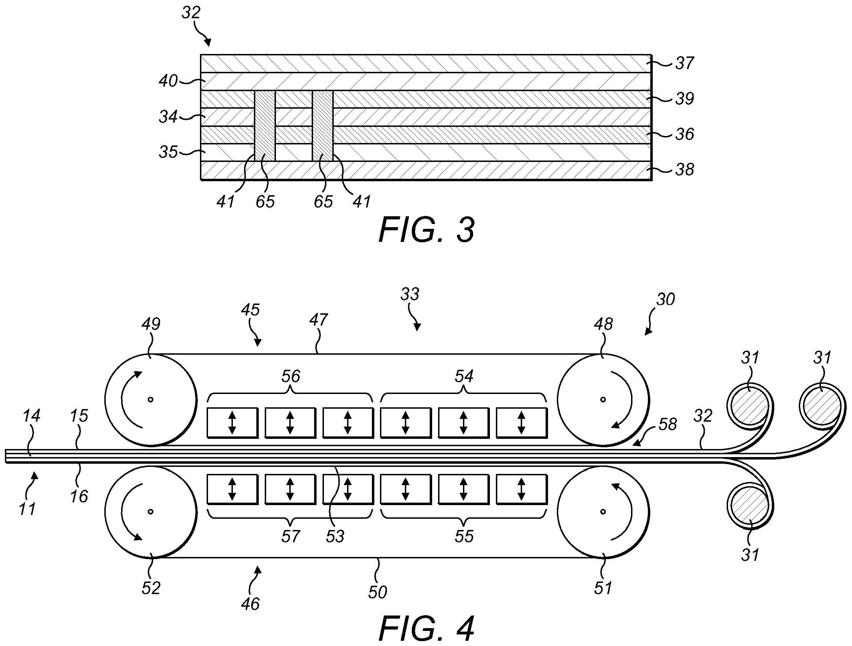

The laminar structure 32, as illustrated in Figure 3, comprises a plurality of plastic layers 34, 35, 36, 37, 38, 39, 40 and the plurality of inserts 65. The laminar structure 32 is preferably capable of forming a plurality of security sheets 11, although only a portion of the laminar structure 32 for forming a single security sheet 11 is shown in Figure 3. In particular, the laminar structure 32 comprises first and second opaque layers 34, 35, which are typically white and/or opaque, and an inlay 36 therebetween. Graphical information, colours and/or patterns may be printed on the outer surfaces of the first and second opaque layers 34, 35. Electronic chips and antenna or the like may be located within the inlay 36 or first and second opaque layers 34, 35.

Substantially transparent first and second overlays 37, 38 are located at the outer most sides of the laminar structure 32 and form the first and second outer surfaces 15, 16 of the plastic substrate 14. First and second intermediate layers 39, 40 comprising security features are located between the first opaque layer 34 and the first overlay 37. In particular, the first intermediate layer 39 may be substantially opaque and located adjacent to the first opaque layer 34. The second intermediate layer 40 is located between the first overlay 37 and the first intermediate layer 39 and is substantially transparent. In other embodiments any suitable number of intermediate layers, on either side of the first and second opaque layers 34, 35, may be used in order to provide different security features.

Each insert 65 is located in an aperture 41 through the first and second opaque layers 34, 35, the inlay 36 and the first intermediate layer 39. The opposing outer surfaces of each insert 65 are overlaid by the second overlay 38 and second intermediate layer 40. Alternatively, each aperture 41 may be formed, and each insert 65 located, in only one or two of the first opaque layer 34, the second opaque layer 35, the inlay 36 and/or the first intermediate layer 39.

The inserts 65 may be punched from the strip separately to the formation of the aperture 41 in the first opaque layer 34, the second opaque layer 35, the inlay 36 and/or the first intermediate layer 39. However, preferably the apertures 41 and inserts 65 are formed and brought together in line, as is disclosed in WO-A-2015/104011. In particular, a single punch tool, with a plurality of punching dies thereon, may be operated to form a plurality of apertures 41. The punch tool then cuts or punches the inserts 65 from the strip and places the inserts 65 into the apertures 41. The shapes of the perimeters of the apertures 41 match the shapes of the insert perimeters such that their edges are substantially adjacent to and substantially in contact with one another. The inserts 65 are preferably friction fitted into the apertures 41, although they may be loosely fitted and held in place by adhesive or by friction in the laminar structure 32.

Each of the layers 34, 35, 36, 37, 38, 39, 40 of the laminar structure 32 may be between approximately 0.05 mm thick and approximately 3 mm thick. Each of the layers 34, 35, 36, 37, 38, 39, 40 is comprised of the plastic forming the plastic substrate 14, such as polycarbonate, although they may be formed of different plastics provided that they are able to fuse together. The insert 65 may have a thickness of between approximately 0.1 mm and approximately 0.4 mm. The strip and inserts may be the same plastic from which the layers 34, 35, 36, 37, 38, 39, 40 are formed, such as polycarbonate or the like.

Figure 4 illustrates an embodiment of an apparatus 30 suitable for manufacturing a plurality of security sheets 11 from the laminar structure 32. The apparatus 30 is similar to the device disclosed in US-B-6669813, the contents of which are incorporated herein by reference. The apparatus 30 comprises a plurality of feeders 31 for arranging the laminar structure 32 prior to feeding it into a laminator 33. The laminator 33 fuses the laminar structure 32 together by the application of heat and pressure to form the plastic substrate 14.

The laminator 33 comprises first and second continuous belts 45, 46 which rotate in opposite directions. The first continuous belt 45 comprises a first support surface 47 extending around first inlet and outlet drums 48, 49 and the second continuous belt 46 comprises a second support surface 50 extending around second inlet and outlet drums 51, 52. The first and second support surfaces 47, 50 are substantially adjacent to one another over an elongate laminating region 53 for receiving and pressurising the laminar structure 32 therebetween. Opposing heating devices 54, 55 are located adjacent to the first and second inlet drums 48, 51 within each of the first and second continuous belts 45, 46. Opposing cooling devices 56, 57 are located between the heating devices 54, 55 and the first and second outlet drums 49, 52. The heating and cooling devices 54, 55, 56, 57 are operable to move towards and away from the first and second support surfaces 47, 50 and apply pressure to the laminar structure 32 between them.

At least one of the first and second continuous belts 45, 46 is intermittently driven to draw the laminar structure 32 into the laminator 33 through a nip 58 between the first and second inlet drums 48, 51. Initially a region of the laminar structure 32 is moved into between the heating devices 54, 55. The heating devices 54, 55 move towards the first and second support surfaces 47, 50 to heat and apply pressure to the region of the laminar structure 32 to form the plastic substrate 14. After a set period of time, typically less than a minute, the heating devices 54, 55 move away from the first and second support surfaces 47, 50 and the first and/or second continuous belt 45, 46 is driven to move the region to between the cooling devices 56, 57. The cooling devices 56, 57 move towards the first and second support surfaces 47, 50 and cool and apply pressure to the plastic substrate 14 in order to maintain its structure. This heating, cooling and pressure application process is repeated along the plurality of alternating heating and cooling devices 54, 55, 56, 57 until the fully formed plastic substrate 14 exits the laminator 33.

During the heating process each of the layers 34, 35, 36, 37, 38, 39, 40 and inserts 65 become at least softened or semi-molten (i.e. a liquid of relatively high viscosity) so that the plastic flows and mixes together across the interfaces between them. The first overlay 37 and second intermediate layer 40 form the first transparent region 18. The first and second opaque layers 34, 35, the inlay 36 and the first intermediate layer 39 form the opaque region 17. The second overlay 38 forms the second transparent region 19. The inserts 65 form the third transparent regions 61 and plurality of windows 60. The plastic substrate 14 comprises mixed material regions formed at positions that correspond to the interfaces between neighbouring layers 34, 35, 36, 37, 38, 39, 40 and insert 65 of the laminar structure 32. The mixed regions comprise varying concentrations of plastic from neighbouring layers 34, 35, 36, 37, 38, 39, 40 and inserts 65 in the laminar structure 32.

In order to achieve such fusing the heating devices 54, 55 may be suitably controlled to raise the temperature and pressure applied to the laminar structure 32 to reach the softening point of the plastic. A temperature at which deformation and therefore fusion is possible at a certain pressure can be ascertained using the Vicat softening point test of any of the methods of the ASTM D 1525 and ISO 306 standards. The Vicat softening point may be the temperature at which a specimen is penetrated to a depth of 1 mm by a flat-ended needle with a 1 mm² circular or square cross-section. In a particular example, the Vicat softening point for polycarbonate can be determined using a heating rate of 50°C/hr and a load of 50 N. In a further example for polycarbonate, the heating devices 54, 55 may apply a temperature of approximately 180 °C at approximately 8 MPa to the laminar structure 32 and the cooling devices 56, 57 may apply a temperature of approximately 20 °C to 30 °C and a pressure of 10 MPa to the laminar structure 32. In yet a further example for polycarbonate, the heating devices 54, 55 may apply a temperature of approximately 180 °C at approximately 1.6 N/mm² to the laminar structure 32 and the cooling devices 56, 57 may apply a temperature of approximately 20 °C to 30 °C at a pressure of 3.2 N/mm² to the laminar structure 32. This latter example is particularly appropriate where the region of the laminar structure 32 between the heating or cooling devices 54, 55, 56, 57 has a surface area of 130 mm by 190 mm.

After the plastic substrate 14 has exited the laminator 33 it may be subjected to further processing, such as the addition of further security features to the first and second outer surfaces 15, 16. The plastic substrate 14 may also be cut into a plurality of security sheets 11. Each security sheet 11 may then be bound with the visa pages 13 and cover to form a passport as shown in Figure 1. In alternative embodiments the security sheet 11 is incorporated into an identity document 10 of any other suitable type, such as a driving licence or identity card.

The at least one security element 20 is then applied to the security sheet 11 to provide the personal data relating to the holder of the identity document 10. In the illustrated embodiment, in which the at least one security element 20 comprises a printed ink, the at least one security element 20 is preferably applied by UV curable ink jet or Dye Diffusion Thermal Transfer (D2T2). The ink may be intaglio ink, flexo ink, gravure ink, offset printing ink, optically variable ink and/or optically variable magnetic ink. In particular, the colourant may comprise a magnetic OVI pigment as disclosed in WO-A-2010/139930.

The identity document 10 of the present invention would be difficult to counterfeit since a plurality of windows 60 would need to be reproduced. It would take a counterfeiter a significant amount of time and expertise to reproduce the windows 60 without the specialist equipment required for the continuous manufacturing method described above. Furthermore, the relatively small size of the windows 60 adds further complexity for reproduction. If the counterfeiter were attempting to modify the at least one security element 20 they would also likely damage the windows 60 and any attempts to replace the windows 60 would be easily identifiable.

Various alternatives to those described above also fall within the scope of the present invention, which is defined by the appended claims. In a preferred embodiment the at least one security element 20 comprises markings within the plastic substrate 14. For example, the first intermediate layer 39 may comprise a markable additive which can be marked with the personal data through the first outer surface 15 of the plastic substrate 14 once formed. The markable additive is preferably laser markable and may, for example, comprise Bragg stack tunable materials, as disclosed in WO-A-2015113143, or photonic crystal tunable materials, as disclosed in EP-A-2714411.

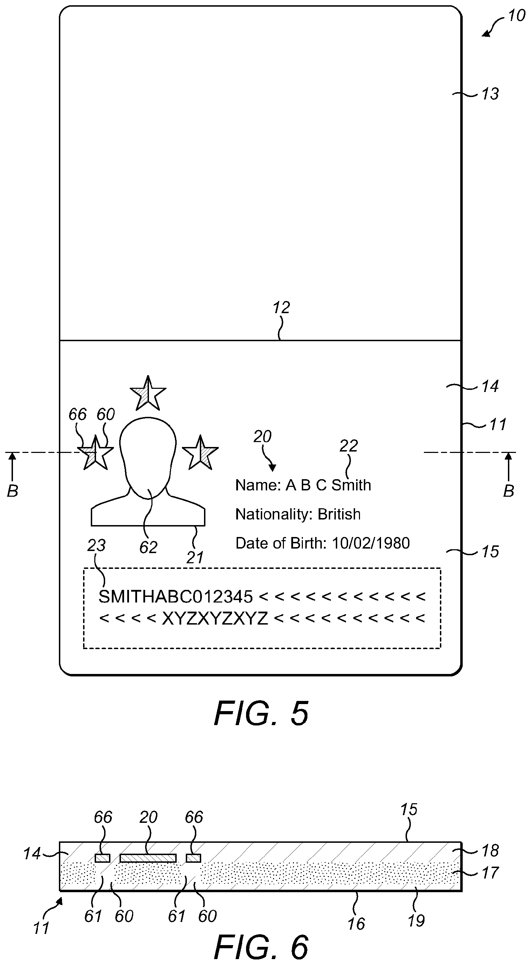

Figures 5 and 6 illustrate an embodiment in which the at least one security element 20, in this case a portrait image 62, is formed by markings within the plastic substrate 14 and windows 60 are located around and adjacent to the portrait image 62. At least one additional security element 66 is also marked within the plastic substrate 14 over each window 60 in a perimeter shape registered to the perimeter shape of the window 60. In the illustrated embodiment each window 60 has a perimeter in the shape of a star and each additional security element 65 comprises half a star. This arrangement is preferably formed by including a markable additive in only the second intermediate layer 40 or the first overlay 37 and by marking the additional security element 66 from the second outer surface 16 through each window 60. Thus the additional security element 65 is perfectly in line with, or in "register" with, the window 60. In order to adapt the portrait image 62 a counterfeiter would like grind down the at least one additional security element 66 in addition to the portrait image 62. When replacing the at least one additional security element 66 it would be very difficult to ensure that it is perfectly in register with the window 60 and any lack of registration would be easily identifiable by a user. In alternate embodiments the additional security element 66 may also form the personal data.

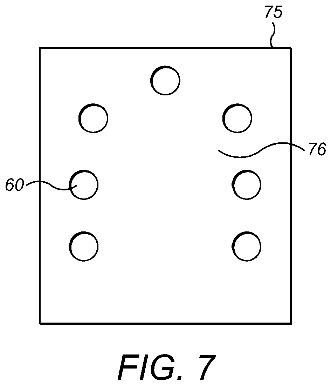

In yet a further embodiment all of the windows 60 may be incorporated into the security sheet 11 during manufacture on a single insert 75. An exemplary single insert 75 suitable for forming the identity document 10 of Figure 1, is illustrated in Figure 7. The insert 75 comprises the plurality of windows 60 through an opaque insert region 76, which may be formed by printing or the like on the outer surfaces of the insert 75. The insert 75 may be the same size as Zone V of the ICAO standards discussed above. If the opaque colours of the first intermediate layer, the second opaque layer 35 and the opaque insert region 76 are the same then the insert 75 will be indistinguishable from the rest of the laminar structure 32. Thus the opaque insert region 76 will form part of the opaque region 17 and will surround the windows 60 in the plastic substrate 14. The at least one security element 20 may be applied to the plastic substrate in a similar manner to the above. This method of manufacturing may be preferable to enable the punching tool which cuts the insert 75 and aperture 41 to have a single punching die rather than a plurality of punching dies.

In a further embodiment each window 60 may, instead of being formed by an insert 65, 75, be incorporated into the laminar structure 32 by being injected as a flowable material into the aperture 41. The flowable material may, for example, comprise an at least semi-liquid plastic of any of the types discussed above, such as polycarbonate.

In yet a further embodiment at least one of the windows 60 is registered to a security feature located on an adjacent page, in particular an adjacent visa page 13, of the identity document 10, in particular a passport. For example, when the security sheet 11 overlies the adjacent page the security features on the adjacent page may be visible through at least one window 60. In a particular embodiment the adjacent visa page 13 comprises at least one security feature which has a perimeter of the same shape as that of an overlying window 60. The security feature on the adjacent visa page 13 may comprise any suitable feature known in the art, including print, holograms, security threads, watermarks, foils and the like.

The security sheet 11 may comprise additional security features, such as further windows located at and extending along the edge of the security sheet 11. The opaque region 17 may comprise a shape or the like along its edge such that the at least one window forms a predefined shape. The further window(s) may be formed according to the method disclosed above or in WO-A-2015/104011. Alternatively, the further window(s) may be formed by providing transparent portions of the first and second opaque layers 34, 35, the inlay 36 and/or the first intermediate layer 39.

Preferably the opaque region 17, particularly between the windows 60, forms a uniform colour when viewed in the first and second outer surface 15, 16. In another embodiment the opaque region 17 is visible as a first colour at the first outer surface 15 and as a second colour at the second outer surface 16 when viewed in reflected light. For example, the second opaque layer 35 and first intermediate layer 39 may comprise different additives to form the different colours. Fluorescent additives may be selected such that the different colours are only apparent when the first and/or second outer surfaces 15, 16 are viewed in reflected UV light. The different colours may also be visible in the thickness of the security sheet 11, particularly if the additives are included in the first opaque layer 34 and the inlay 36 and/or if the first and second opaque layers 34, 35, the inlay 36 and/or the first intermediate layer 39 are sufficiently thick.

Furthermore, in any of the examples above machine readable materials could be included in any of the laminar structure 32, inserts 65 or any other material. Alternatively, they could comprise further machine readable layers or materials. The machine readable materials may contain detectable materials that react to an external stimulus, which may include but are not limited to fluorescent, phosphorescent, infrared absorbing, thermochromic, photochromic, magnetic, electrochromic, conductive and piezochromic materials.

## Claims

1. A security sheet (11) for an identity document (10) comprising:
a plastic substrate (14) formed from a plurality of plastic layers (34); and
at least one security element in the form of personal data, the at least one security element (20) being located in and/or on the plastic substrate (14), **characterised in that** the plastic substrate (14) comprises a plurality of windows (60), each window having a maximum width in the range of from approximately 0,5 mm to approximately 10 mm; and **in that** the at least one security element is located adjacent to the plurality of windows; and **in that** the at least one security element (20) forms an image (21) comprising a portrait image (62) of a holder of the identity document (10) and the plurality of windows (60) are disposed around the portrait image.

2. A security sheet (11) as claimed in claim 1 wherein each of the plurality of windows (60) is formed from an insert (65) located in an aperture (41) in at least one of the plurality of plastic layers (34).

3. A security sheet (11) as claimed in claim 1 or claim 2 wherein at least one security element (20) is less than approximately 5 mm from at least one window (60).

4. A security sheet (11) as claimed in any one of the preceding claims wherein the at least one security element (20) comprises marking within the plastic substrate (14) and/or printed ink on the plastic substrate (14).

5. A security sheet (11) as claimed in any one of the preceding claims wherein the security sheet (11) further comprises an opaque region (17) extending around and between the windows (60).

6. A security sheet (11) as claimed in any one of the preceding claims wherein the perimeter of each window (60) has a shape selected from one or more patterns, indicia, symbols or logos.

7. A security sheet (11) as claimed in claim 6 wherein the perimeters of adjacent windows (60) have shapes which together form a sequence of linked patterns, indicia, symbols and/or logos and/or a code.

8. A security sheet (11) as claimed in any one of the preceding claims wherein each window (60) has a maximum width of at least approximately 1mm, at least approximately 3 mm or at least approximately 4 mm.

9. A security sheet (11) as claimed in any one of the preceding claims further comprising an additional element overlying and registered to at least one window (60).

10. An identity document (10) comprising a security sheet (11) of any one of the preceding claims, and an adjacent page (13) comprising a security feature which is in register with at least one security element (20) overlying at least one window (60) when the security sheet (11) overlies the adjacent page (13).

11. A method of manufacturing a security sheet (11) comprising:
forming a laminar structure from a plurality of plastic layers (34) and comprising a plurality of windows (60), each window (60) having a maximum width in the range of from approximately 0.5 mm to approximately 10 mm;
fusing the laminar structure together to form a plastic substrate (14); and
applying at least one security element (20) in the form of personal data to the plastic substrate (14), the at least one security element (20) being located in and/or on the plastic substrate (14) and adjacent to the plurality of windows, wherein the at least one security element (20) forms an image (21) comprising a portrait image of a holder of the identity document (10) and the plurality of windows (60) are disposed around the portrait image.

12. A method as claimed in claim 11 further comprising:
forming at least one aperture (41) in at least one plastic layer (34) and inserting an insert (65) into the at least one aperture (41) for forming the windows (60);
feeding a plurality of plastic layers (34), including the insert (65) and the at least one plastic layer (34), into a laminator (33);
applying heat and pressure to the plurality of plastic layers (34) in the laminator (33) to form the plastic substrate (14).

13. A method as claimed in claim 12 wherein the insert (65) comprises a flowable material or wherein the insert (65) is formed by punching an insert substrate from a strip.

14. A method as claimed in any one of claims 11 to 13 wherein the at least one security element is applied by marking a markable additive in at least one of the plastic layers.

15. A method as claimed in any one of claims 11 to 14 wherein the fusing step comprises applying heat to at least the plastic layers such that at least the plastic layers are in an at least softened state.

## Patentansprüche

1. Sicherheitsblatt (11) für ein Ausweisdokument (10), umfassend:
ein Kunststoffsubstrat (14), gebildet aus einer Mehrzahl von Kunststoffschichten (34);
mindestens ein Sicherheitselement in Form von persönlichen Daten, wobei das mindestens eine Sicherheitselement (20) in und/oder auf dem Kunststoffsubstrat (14) angeordnet ist,
**dadurch gekennzeichnet, dass** das Kunststoffsubstrat (14) eine Mehrzahl von Fenstern (60) umfasst, wobei jedes Fenster eine maximale Breite im Bereich von etwa 0,5 mm bis etwa 10 mm aufweist; und dass das mindestens eine Sicherheitselement an die Mehrzahl von Fenstern angrenzend angeordnet ist; und dass das mindestens eine Sicherheitselement (20) ein Bild (21) bildet, das ein Porträtbild (62) eines Inhabers des Ausweisdokuments (10) umfasst, und die Mehrzahl von Fenstern (60) um das Porträtbild herum angeordnet sind.

2. Sicherheitsblatt (11) nach Anspruch 1, bei dem jedes der Mehrzahl von Fenstern (60) aus einem Einsatz (65) gebildet ist, der sich in einer Öffnung (41) in mindestens einer der Mehrzahl von Kunststoffschichten (34) befindet.

3. Sicherheitsblatt (11) nach Anspruch 1 oder Anspruch 2, bei dem mindestens ein Sicherheitselement (20) weniger als etwa 5 mm von mindestens einem Fenster (60) entfernt ist.

4. Sicherheitsblatt (11) nach einem der vorhergehenden Ansprüche, bei dem das mindestens eine Sicherheitselement (20) eine Markierung innerhalb des Kunststoffsubstrats (14) und/oder gedruckte Tinte auf dem Kunststoffsubstrat (14) umfasst.

5. Sicherheitsblatt (11) nach einem der vorhergehenden Ansprüche, wobei das Sicherheitsblatt (11) ferner einen undurchsichtigen Bereich (17) umfasst, der sich um die und zwischen den Fenstern (60) erstreckt.

6. Sicherheitsblatt (11) nach einem der vorhergehenden Ansprüche, bei dem der Umfang jedes Fensters (60) eine Form hat, die aus einem oder mehreren Mustern, Zeichen, Symbolen oder Logos ausgewählt ist.

7. Sicherheitsblatt (11) nach Anspruch 6, bei dem die Umfänge von benachbarten Fenstern (60) Formen aufweisen, die zusammen eine Folge von miteinander verbundenen Mustern, Indizien, Symbolen und/oder Logos und/oder einen Code bilden.

8. Sicherheitsblatt (11) nach einem der vorhergehenden Ansprüche, bei dem jedes Fenster (60) eine maximale Breite von mindestens ungefähr 1 mm, mindestens ungefähr 3 mm oder mindestens ungefähr 4 mm hat.

9. Sicherheitsblatt (11) nach einem der vorhergehenden Ansprüche, das ferner ein zusätzliches Element umfasst, das über mindestens einem Fenster (60) liegt und auf dieses registriert ist.

10. Ausweisdokument (10), umfassend ein Sicherheitsblatt (11) nach einem der vorhergehenden Ansprüche und eine angrenzende Seite (13) mit einem Sicherheitsmerkmal, das mit mindestens einem Sicherheitselement (20), das über mindestens einem Fenster (60) liegt, registriert ist, wenn das Sicherheitsblatt (11) über der angrenzenden Seite (13) liegt.

11. Verfahren zur Herstellung eines Sicherheitsblatts (11) mit den Schritten:
Bilden einer Schichtstruktur aus einer Mehrzahl von Kunststoffschichten (34) und mit einer Mehrzahl von Fenstern (60), wobei jedes Fenster (60) eine maximale Breite im Bereich von etwa 0,5 mm bis etwa 10 mm aufweist;
Verschmelzen der laminaren Struktur, um ein Kunststoffsubstrat (14) zu bilden; und
Anbringen mindestens eines Sicherheitselements (20) in Form von personenbezogenen Daten auf dem Kunststoffsubstrat (14), wobei das mindestens eine Sicherheitselement (20) in und/oder auf dem Kunststoffsubstrat (14) und angrenzend an die Mehrzahl von Fenstern angeordnet ist, wobei das mindestens eine Sicherheitselement (20) ein Bild (21) bildet, das ein Porträtbild eines Inhabers des Ausweisdokuments (10) umfasst, und die Mehrzahl von Fenstern (60) um das Porträtbild herum angeordnet sind.

12. Verfahren nach Anspruch 11, ferner mit den Schritten:
Bilden mindestens einer Öffnung (41) in mindestens einer Kunststoffschicht (34) und Einsetzen eines Einsatzes (65) in die mindestens eine Öffnung (41), um die Fenster (60) zu bilden;
Einführen einer Mehrzahl von Kunststoffschichten (34), darunter der Einsatz (65) und die mindestens eine Kunststoffschicht (34), in eine Laminiervorrichtung (33);
Anwenden von Wärme und Druck auf die Mehrzahl von Kunststoffschichten (34) in der Laminiervorrichtung (33), um das Kunststoffsubstrat (14) zu bilden.

13. Verfahren nach Anspruch 12, bei dem der Einsatz (65) ein fließfähiges Material umfasst oder bei dem der Einsatz (65) durch Ausstanzen eines Einsatzsubstrats aus einem Streifen gebildet wird.

14. Verfahren nach einem der Ansprüche 11 bis 13, bei dem das mindestens eine Sicherheitselement durch Markieren eines markierbaren Zusatzes in mindestens einer der Kunststoffschichten angebracht wird.

15. Verfahren nach einem der Ansprüche 11 bis 14, bei dem der Schritt des Verschmelzens das Aufbringen von Wärme auf wenigstens die Kunststoffschichten umfasst, so dass wenigstens die Kunststoffschichten in einem wenigstens erweichten Zustand sind.

## Revendications

1. Feuille de sécurité (11) pour une pièce d'identité (10) comprenant :
un substrat en matière plastique (14) formé d'une pluralité de couches de matière plastique (34) ; et
au moins un élément de sécurité sous la forme de données personnelles, le au moins un élément de sécurité (20) étant positionné dans et/ou sur le substrat en matière plastique (14),
**caractérisé en ce que** le substrat en matière plastique (14) comprend une pluralité de fenêtres (60), chaque fenêtre ayant une largeur maximale dans la plage d'approximativement 0,5 mm à approximativement 10 mm ; et **en ce que** le au moins un élément de sécurité est positionné adjacent à la pluralité de fenêtres ; et **en ce que** le au moins un élément de sécurité (20) forme une image (21) comprenant une image de portrait (62) d'un titulaire de la pièce d'identité (10) et la pluralité de fenêtres (60) sont disposées autour de l'image de portrait.

2. Feuille de sécurité (11) selon la revendication 1, dans laquelle chacune de la pluralité de fenêtres (60) est formée à partir d'un insert (65) positionné dans une ouverture (41) dans au moins une de la pluralité de couches de matière plastique (34).

3. Feuille de sécurité (11) selon la revendication 1 ou la revendication 2, dans laquelle au moins un élément de sécurité (20) est à moins d'approximativement 5 mm d'au moins une fenêtre (60).

4. Feuille de sécurité (11) selon l'une quelconque des revendications précédentes, dans laquelle le au moins un élément de sécurité (20) comprend un marquage à l'intérieur du substrat en matière plastique (14) et/ou de l'encre imprimée sur le substrat en matière plastique (14).

5. Feuille de sécurité (11) selon l'une quelconque des revendications précédentes, dans laquelle la feuille de sécurité (11) comprend en outre une région opaque (17) s'étendant autour de et entre les fenêtres (60).

6. Feuille de sécurité (11) selon l'une quelconque des revendications précédentes, dans laquelle le périmètre de chaque fenêtre (60) a une forme choisie parmi un ou plusieurs motifs, indices, symboles ou logos.

7. Feuille de sécurité (11) selon la revendication 6, dans laquelle les périmètres de fenêtres adjacentes (60) ont des formes qui forment ensemble une séquence de motifs, indices, symboles et/ou logos liés et/ou un code.

8. Feuille de sécurité (11) selon l'une quelconque des revendications précédentes, dans laquelle chaque fenêtre (60) a une largeur maximale d'au moins approximativement 1 mm, d'au moins approximativement 3 mm ou d'au moins approximativement 4 mm.

9. Feuille de sécurité (11) selon l'une quelconque des revendications précédentes, comprenant en outre un élément supplémentaire recouvrant et aligné sur au moins une fenêtre (60).

10. Pièce d'identité (10) comprenant une feuille de sécurité (11) selon l'une quelconque des revendications précédentes, et une page adjacente (13) comprenant une caractéristique de sécurité qui est en correspondance avec au moins un élément de sécurité (20) recouvrant au moins une fenêtre (60) lorsque la feuille de sécurité (11) recouvre la page adjacente (13).

11. Procédé de fabrication d'une feuille de sécurité (11) comprenant les étapes consistant à :
former une structure lamellaire à partir d'une pluralité de couches de matière plastique (34) et comprenant une pluralité de fenêtres (60), chaque fenêtre (60) ayant une largeur maximale dans la plage d'approximativement 0,5 mm à approximativement 10 mm ;
fusionner la structure lamellaire pour former un substrat en matière plastique (14) ; et
appliquer au moins un élément de sécurité (20) sous la forme de données personnelles sur le substrat en matière plastique (14), le au moins un élément de sécurité (20) étant positionné dans et/ou sur le substrat en matière plastique (14) et adjacent à la pluralité de fenêtres, dans lequel le au moins un élément de sécurité (20) forme une image (21) comprenant une image de portrait d'un titulaire de la pièce d'identité (10) et la pluralité de fenêtres (60) sont disposées autour de l'image de portrait.

12. Procédé selon la revendication 11, comprenant en outre les étapes consistant à :
former au moins une ouverture (41) dans au moins une couche de matière plastique (34) et insérer un insert (65) dans la au moins une ouverture (41) pour former les fenêtres (60) ;
introduire une pluralité de couches de matière plastique (34), comprenant l'insert (65) et la au moins une couche de matière plastique (34), dans une machine à plastifier (33) ;
appliquer de la chaleur et de la pression à la pluralité de couches de matière plastique (34) dans la machine à plastifier (33) pour former le substrat en matière plastique (14) .

13. Procédé selon la revendication 12, dans lequel l'insert (65) comprend un matériau fluide ou dans lequel l'insert (65) est formé par poinçonnage d'un substrat d'insert à partir d'une bande.

14. Procédé selon l'une quelconque des revendications 11 à 13, dans lequel le au moins un élément de sécurité est appliqué en marquant un additif marquable dans au moins une des couches de matière plastique.

15. Procédé selon l'une quelconque des revendications 11 à 14, dans lequel l'étape de fusion comprend l'application de chaleur à au moins les couches de matière plastique de telle sorte qu'au moins les couches de matière plastique soient dans un état au moins ramolli.
